# EUROPÄISCHE PATENTSCHRIFT

(11) **EP 3 326 272 B1**
(45) Veröffentlichungstag und Bekanntmachung des Hinweises auf die Patenterteilung: **16.12.2020**
(21) Anmeldenummer: 16741016.6
(22) Anmeldetag: 20.07.2016
(51) Int. Cl.: H02K 1/20, H02K 5/15, H02K 7/00, H02K 7/08, H02K 9/10, H02K 9/19, H02K 9/22, H02K 5/18

(54) **ELEKTRISCHE MASCHINE**
ELECTRIC MACHINE
MACHINE ÉLECTRIQUE

(30) Priorität: 20.07.2015 AT 4772015
(43) Veröffentlichungstag der Anmeldung: 30.05.2018
(73) Patentinhaber: AVL List GmbH, 8020 Graz (AT)
(72) Erfinder: SCHOCHLOW, Andreas, 64354 Reinheim (DE); AUMÜLLER, Bernhard, 8063 Eggersdorf (AT); MÜLLER, Wolfgang Johannes, 6890 Lustenau (AT); ROBITSCHKO, Reinhard, 6867 Schwarzenberg (AT); KINDER, Jutta, 88138 Weissensberg (DE); SALVATO, Roberto, 6911 Lochau (AT)
(74) Vertreter: terpatent Patentanwälte ter Smitten Eberlein-Van Hoof Rütten Daubert
(86) Internationale Anmeldenummer: PCT/EP2016/067235
(87) Internationale Veröffentlichungsnummer: WO 2017/013144

(56) Entgegenhaltungen:
- DE-A1-102006 045 178
- DE-A1-102009 012 324
- DE-A1-102012 203 691
- DE-A1-102013 211 361
- JP-A- S60 176 436
- US-A1- 2013 328 423
- US-A1- 2014 368 064

## Beschreibung

Die Erfindung betrifft eine elektrische Maschine mit einem Stator sowie einem zumindest teilweise innerhalb des Stators angeordneten Rotor mit einer Welle, die an zumindest einer Stirnseite zumindest eine, in einer Richtung entlang der Drehachse der Welle verlaufende Öffnung aufweist.

Die elektrische Maschine kann im Prinzip jeder Art und Baugröße sein, insbesondere kann es sich dabei um eine Gleichstrommaschine oder eine Drehstrommaschine, bevorzugt um eine Asynchron- oder eine Synchronmaschine, handeln.

Elektrische Maschinen im Sinne der vorliegenden Erfindung dienen zur Wandlung von elektrischer in mechanische Energie und/oder umgekehrt. Solche Maschinen können sich aufgrund von Lagerverlusten, Eisenverlusten, ohmschen Verlusten etc. während des Betriebes erwärmen. Die Erwärmung wird üblicherweise durch Wärmeleitung in den Bauteilen nach außen abgeführt und/oder durch Wärmetauschermedien wie Luft oder andere Fluide (vorzugsweise Kühlwasser) aus dem inneren der Maschine an externe Komponenten oder Anlagen transportiert, die das Wärmetauschermedium rückkühlen, wobei die Ableitung der innerhalb der Maschine entstehenden Wärme besonders schwierig und daher kritisch sein kann. Beispielsweise können einzelne Bereiche der Maschine aufgrund von Verlusten des elektrischen Rotorsystems sowie der Rotorlager eine überhöhte Temperatur annehmen. Die daraus resultierenden Temperaturdifferenzen führen zu mechanischen Verformungen einzelner Komponenten, worunter beispielsweise die Lagerung von Rotoren leiden kann, insbesondere, wenn in dem Rotor entstehende Wärme auf den Innenring eines Lagers übertragen wird und/oder aufgrund von Reibungsverlusten innerhalb des Lagers entsteht. Da der Außenring eines solchen Lagers üblicherweise in einem kühleren Außengehäuse der Maschine aufgenommen ist und die beiden Lagerringe mittels durch Schmiermittel benetzte Kugeln oder Rollen voneinander beabstandet und daher kaum miteinander thermisch verbunden sind, ist die Temperaturdifferenz zwischen Außenring und Innenring des Lagers häufig besonders hoch. Die dadurch verursachten mechanischen Verformungen können zu einem deutlich erhöhten Verschleiß der Lager führen. Außerdem kann eine hohe Temperatur des Rotors den elektrischen Widerstand einzelner Komponenten der Maschine erhöhen, wodurch der Wirkungsgrad der Maschine sinkt.

Die genannten Probleme sind bei elektrischen Maschinen mit einer hohen thermischen Ausnutzung besonders deutlich ausgeprägt, wie sie insbesondere bei Prüfstandsanwendungen für Komponenten, Motoren und der Antriebsstrangprüfung im Automobilbereich zum Einsatz kommen.

Des Weiteren ist aus der DE 10 2006 045 178 A1 eine elektrische Maschine mit einem Stator und einem auf einer Welle angeordneten Rotor bekannt. Die Welle weist axial hintereinanderliegende Abschnitte auf, von denen der mittlere Abschnitt und einer der Endabschnitte als Hohlwelle ausgebildet sind. Der mittlere Abschnitt der Hohlwelle weist an einem axialen Ende, welches gegenüberliegend zu dem als Vollwelle ausgebildeten Wellenabschnitt angeordnet ist, eine radiale Öffnung auf, die in die axiale verlaufende innere Öffnung des mittleren Hohlwellenabschnitts mündet. Mittels eines Lüfterrades wird Luft über diese radiale Öffnung in die Hohlwelle gefördert, um die Welle zu kühlen.

Zusätzlich sind aus der US 2014/0368064 A1 und der DE 10 2012 203 691 A1 Elektromotoren bekannt, in deren Welle Wärmerohre eingesetzt sind, deren inneres Gas beziehungsweise Flüssigkeit über einen äußeren Wärmetauscher abgekühlt wird, um anschließend zurück in den Elektromotor zu strömen und auf diese Weise Wärme aus dem Motor nach außen abzuführen.

Es ist daher eine Aufgabe der Erfindung, eine elektrische Maschine zu schaffen, die ein verbessertes Temperaturmanagement aufweist.

Diese Aufgabe wird mit einer elektrischen Maschine der eingangs genannten Art gelöst, bei welcher erfindungsgemäß in die Öffnung zumindest ein Wärmeleitelement eingesetzt ist, wobei das Wärmeleitelement vollständig aus einem Material mit einer höheren Wärmeleitfähigkeit als das Material der Welle besteht und die Querschnittsfläche der Öffnung zumindest zu 95% ausfüllt.

Dank der Erfindung ist es möglich, eine elektrische Maschine zu schaffen, welche die eingangs genannten Nachteile überwindet und eine verbesserte Wärmeverteilung innerhalb der Maschine sowie eine verbesserte Wärmeabfuhr nach außen ermöglicht. Dadurch kann die Rotortemperatur effektiv gesenkt werden. Außerdem ist es möglich, an den Lagern entstehende Wärme gezielt zu verteilen. Ein solcherart verbessertes Temperaturmanagement reduziert die Verlustleistung der Maschine und beugt temperaturbedingten erhöhten Lagerverschleiß vor.

Bei der Welle handelt sich um die Antriebswelle des Rotors. Sofern die Welle aus zwei oder mehr als zwei unterschiedlichen Materialien gefertigt ist, so ist im Sinne der vorliegenden Erfindung unter dem Begriff "Wärmeleitfähigkeit der Welle" ein Wärmeleitfähigkeitswert zu verstehen, der näherungsweise im Wesentlichen durch Mittelwertbildung der Wärmeleitfähigkeit der einzelnen Materialien der Welle ermittelt wird, wobei die Gewichtsanteile oder Querschnittsanteile der einzelnen Materialien berücksichtigt werden. Besteht eine Welle also beispielsweise zu 50% Gewichtsanteil oder Querschnittsanteil aus dem Material A, zu 25% Gewichtsanteil oder Querschnittsanteil aus dem Material B und zu 25% Gewichtsanteil oder Querschnittsanteil aus dem Material C, so beträgt die Wärmeleitfähigkeit der Welle im Sinne der Erfindung 0,5a+0,25b+0,25c, wobei a, b, c die Wärmeleitfähigkeit der Materialien A, B bzw. C repräsentieren. Wesentlich ist, dass die Wärmeleitelemente eine höhere Wärmeleitfähigkeit als die Welle aufweisen, sodass die Wärmeleitelemente einen effektiven Beitrag zur Verbesserung der Wärmeleitfähigkeit der Welle leisten können. Die Öffnungen müssen sich nicht zwangsläufig parallel zur Drehachse der Welle erstrecken, sondern können ebenso geneigt sein. Typische Werte für die Wärmeleitfähigkeit von Wellen sind z.B. 15 W/mK für eine Chromstahlwelle, 45 W/mK für herkömmliche Stahlwellen. Die Wärmeleitfähigkeit von Wellen mit Aluminium beträgt ca. 150 W/mK und mit Kupfer beispielsweise 400 W/mK.

Vorzugsweise kann die die Wärmeleitfähigkeit des Wärmeleitelements zumindest 10%, 20%, 50%, 100%, 300% oder 3000% höher sein als jene der Welle, wobei die Wärmeleitfähigkeit des Wärmeleitelements vorzugsweise zumindest 150 W/m K beträgt.

Um einen besonders einfachen Aufbau der elektrischen Maschine zu erhalten, kann es vorgesehen sein, dass die zumindest eine Öffnung parallel zur Drehachse der Welle verläuft.

Vorzugsweise können die zumindest eine Öffnung und das darin aufgenommene Wärmeleitelement dieselbe Querschnittsform, vorzugsweise einen kreisrunden Querschnitt aufweisen. Dadurch wird ein besonders effektiver Wärmeleitübergang zwischen dem Wärmeleitelement und der Öffnung ermöglicht und gleichzeitig eine gute mechanische Passung realisiert. Wenn die Welle nur eine einzige Öffnung aufweist, sollte diese konzentrisch (bzw. koaxial) mit der Drehachse der Welle angeordnet sein.

Um einen besonders einfachen und stabilen mechanischen Aufbau der Welle sowie der darin aufgenommenen Wärmeleitelemente zu erhalten, kann es vorgesehen sein, dass das zumindest eine Wärmeleitelement in loser Passung in die zumindest eine Öffnung eingesetzt ist. Unter einer losen Passung wird im Rahmen dieser Offenbarung eine Anordnung verstanden, in welcher ein Element (hier: das Wärmeleitelement) in einer korrespondierenden Öffnung dergestalt gehalten wird, dass das Element durch ausreichendes Bewegungsspiel ohne hohen Kraftaufwand in die Öffnung eingesetzt und aus dieser herausgenommen werden kann. Bei Öffnungen mit einem Durchmesser von beispielsweise 5mm kann der der Durchmesser des darin aufgenommenen Wärmeleitelements beispielsweise 4,8 bis 4,9mm betragen.

Insbesondere kann vorgesehen sein, dass die Welle zumindest zwei oder mehr Öffnungen aufweist, in die je zumindest ein Wärmeleitelement eingesetzt ist. Dabei kann es günstig sein, wenn die Öffnungen dergestalt angeordnet sind, dass der gemeinsame geometrische Schwerpunkt darin angeordneter Wärmeleitelemente auf der Drehachse der Welle liegt. Die Wärmeleitelemente sind daher vorzugsweise konzentrisch zur Drehachse der Welle angeordnet, wodurch sich einer Unwucht der Anordnung bestehend aus der Welle und der darin aufgenommenen Wärmeleitelemente vorbeugen lässt.

Um eine besonders hohe Wärmeleitfähigkeit im Bereich der Oberfläche der Welle zu schaffen, kann vorgesehen sein, dass die Öffnungen in einem Außenbereich der Welle angeordnet sind, der sich in einem Abstand von R/2 bis R von dem Mittelpunkt der Welle erstreckt, wobei R der Radius der Welle ist.

Insbesondere kann vorgesehen sein, dass die Wärmeleitelemente in den Öffnungen mittels einer Klebeverbindung und/oder Wärmeleitpaste fixiert sind. Der für die Klebeverbindung eingesetzte Kleber ist vorzugsweise ein Kleber mit verbesserten Wärmeleiteigenschaften.

Besonders günstig kann es sein, wenn die Wärmeleitelemente aus Kupfer, Kupferlegierungen und/oder aus Aluminium bestehen.

Um bei den Wellenlagern entstehende Wärme besonders effizient abzuleiten, kann vorgesehen sein, dass sich die zumindest eine Öffnung und/oder die Wärmleitelemente von einer ersten oder zweiten Stirnseite der Welle entlang der Drehachse in Richtung der gegenüberliegenden zweiten oder ersten Stirnseite zumindest bis zum Bereich der der ersten oder der zweiten Stirnseite zugeordneten Wellenlager erstrecken. Die Öffnungen sowie die Wärmeleitelemente sind dabei dergestalt angeordnet, dass die biegekritische Drehzahl der Welle nicht wesentlich reduziert wird. Die Öffnungen sowie die Wärmeleitelemente erstrecken sich daher nur soweit in das Maschineninnere hinein, wie dies unter der Berücksichtigung des Einflusses auf die beiden Parameter a) biegekritische Drehzahl und b) verbesserte Wärmeableitung zulässig bzw. sinnvoll ist.

Besonders günstig kann es sein, wenn sich die zumindest eine Öffnung und/oder das zumindest eine Wärmeleitelement von der ersten oder zweiten Stirnseite der Welle entlang der Drehachse in Richtung der gegenüberliegenden zweiten oder ersten Stirnseite bis hin zu einem Rotorpaket des Rotors erstrecken.

Die zu der zumindest einen Öffnung und/oder dem zumindest einen Wellenleitelement im Rahmen dieser Offenbarung gemachten Angaben können natürlich auch auf eine Mehrzahl von Öffnungen und/oder Wärmeleitelemente, insbesondere auf alle Öffnungen und/oder Wellenelemente zutreffen. Das Rotorpaket des Rotors ist üblicherweise jener Bereich des Rotors, der elektrische Wicklungen, Läuferstäbe (bei Asynchronmaschinen) und/oder Permanentmagnete enthält, die zur Entwicklung eines mechanischen Drehmoments mit dem Statorfeld wechselwirken.

Insbesondere kann es vorgesehen sein, dass sich die zumindest eine Öffnung und/oder das zumindest eine Wärmeleitelement in einen Bereich der Welle erstrecken, der innerhalb des Rotorpakets liegt.

Um das Einschieben der Wärmeleitelemente in die Welle zu erleichtern, kann vorgesehen sein, dass die zumindest eine Öffnung eine die Welle nach außen, vorzugsweise in radialer Richtung, durchsetzende Bohrung aufweist, wobei die Bohrung vorzugsweise in einem von der Stirnseite abgewandten Endbereich der Öffnung angeordnet ist, der frei von Wärmeleitelementen ist. Durch den Einschub des Wärmeleitelements kann überschüssige Luft sowie Wärmeleitpaste oder Kleber durch die Bohrung entweichen, sodass das Wärmeleitelement nach einem einmaligen Einschieben in die Öffnung in einer definierten Position gehalten wird. Die Bohrung ist vorzugsweise an einer solchen Stelle der Welle vorgesehen, dass die Bohrung auch nach dem Einschieben des Wärmeleitelements von diesem nicht überdeckt oder verschlossen wird.

Die Wärmeleitelemente können die Wärmeleitfähigkeit der Welle besonders effektiv erhöhen, wenn die Gesamtquerschnittsfläche der Öffnungen einen Flächenanteil von 5 bis 50%, vorzugsweise 15 bis 30%, besonders bevorzugt 15 bis 20%, der Querschnittsfläche der Welle einnehmen.

Ein weiterer Aspekt der Erfindung betrifft eine elektrische Maschine mit einem Stator sowie einem zumindest teilweise innerhalb des Stators angeordneten Rotor, wobei die elektrische Maschine zumindest eine Wärmetauschvorrichtung mit zumindest einem mit dem Rotor drehfest verbundenen ersten Wärmetauschelement sowie zumindest einem mit dem Stator drehfest verbundenen zweiten Wärmetauschelement aufweist, wobei das erste und das zweite Wärmetauschelement je zumindest eine Wärmetauschfläche aufweisen, wobei sich die Wärmetauschflächen zumindest in einem Teilbereich von einer Stirnseite des Rotors ausgehend in einer Richtung entlang der des Rotors erstrecken und die Wärmetauschflächen zumindest innerhalb dieses Teilbereichs einander in Radialrichtung des Rotors gegenüberliegen und konzentrisch zur Drehachse des Rotors angeordnet sind.

Dank der Wärmetauschvorrichtung kann Wärme besonders effizient aus dem Inneren der Maschine direkt nach außen oder in ein von Kühlmedium durchströmtes Bauteil - und damit indirekt nach außen - abgeleitet werden. Diese Ausführungsform der Erfindung ist frei mit den vorgenannten Ausbildungen der Erfindung kombinierbar und verbessert das Temperaturverhalten der elektrischen Maschine in synergetischer Weise.

Prinzipiell können die Wärmetauschflächen einander durchgehend (nicht nur in Teilbereichen) in Radialrichtung gegenüberliegen. Auch ein Gegenüberliegen in Achsrichtung ist möglich. Das erste Wärmetauschelement ist dazu eingerichtet, in Bezug auf das zweite Wärmetauschelement zu rotieren. Deshalb ist lediglich ein Gegenüberliegen der Wärmetauschflächen in Umfangsrichtung ausgeschlossen, weil dadurch eine Rotation der Wärmetauschelemente zueinander blockiert wäre. Unter "einander gegenüberliegenden Wärmetauschflächen" wird im Rahmen dieser Offenbarung - sofern nicht anders angegeben - immer gemeint, dass die Wärmetauschflächen des ersten Wärmetauschelements den Wärmetauschflächen des zweiten Wärmetauschelements gegenüberliegen.

Insbesondere kann vorgesehen sein, dass das erste Wärmetauschelement und/oder das zweite Wärmetauschelement zumindest einen, vorzugsweise zwei oder mehr, zumindest abschnittsweise ringförmige Vorsprünge aufweisen, wobei die Wärmetauschflächen an der Oberfläche der Vorsprünge ausgebildet sind. Die ringförmigen Vorsprünge können eine hülsenförmigen oder trommelförmigen Formgebung aufweisen und sind dazu eingerichtet, die Wärmetauschflächen des ersten und/oder zweiten Wärmetauschelements zu vergrößern.

Dabei kann es günstig sein, wenn einzelne Vorsprünge des ersten Wärmetauschelements sich in zwischen den Vorsprüngen des zweiten Wärmetauschelements liegende Bereiche erstrecken und/oder umgekehrt. Das erste und das zweite Wärmetauschelement sind vorzugsweise dergestalt ausgebildet, dass diese eine weitgehend zueinander korrespondierende, komplementäre Formgebung aufweisen, wodurch ein besonders effektiver Wärmeaustausch zwischen den Wärmetauschelementen erzielt werden kann. Zur Klarstellung des Begriffes "Formgebung" wird an dieser Stelle festgehalten, dass die Formgebung eines Objektes ist im Allgemeinen durch den Verlauf der Oberfläche desselben Objektes gegeben ist. Die Formgebung entspricht daher einer gedachte, mit der Oberfläche des Objektes zusammenfallenden Umrandung.

Das erste Wärmetauschelement ist aufgrund der drehfesten Verbindung mit dem Rotor den gleichen Drehzahlen wie der Rotor und den damit verbundenen Fliehkräften ausgesetzt, die zu einer Verformung des ersten Wärmetauschelements führen könnten. Um einer Verformung vorzubeugen, besteht das erste Wärmetauschelement vorzugsweise aus einem (wärmeleitfähigen) Material mit einer Streckgrenze von zumindest 300 N/mm², besonders bevorzugt von zumindest 400 N/mm², Die Wärmeleitfähigkeit kann beispielsweise zumindest 100 W/ m K betragen. Die Rotordrehzahlen einer elektrischen Maschine werden in Abhängigkeit von der gewünschten Leistung sowie dem gewünschten Drehmoment bestimmt und betragen typischerweise wenige 100 U/min bis hin zu über 20 000 U/min. Besonders günstig kann es sein, wenn das erste Wärmetauschelement aus Aluminium, vorzugsweise aus EN AW-7075 besteht, welches eine besonders hohe Streckgrenze in Kombination mit guter Wärmeleitfähigkeit aufweist.

Das zweite Wärmetauschelement kann günstiger Weise aus Aluminium, Kupfer und/oder aus Kupferlegierungen wie beispielsweise Messing oder Bronze bestehen, wobei Aluminium einfacher als Kupfer maschinell bearbeitet werden kann.

Bei der Wärmetauschvorrichtung kann es sich um eine innere Wärmetauschvorrichtung handeln, die zwischen zwei stirnseitig angeordneten, fest mit dem Stator verbundenen Abdeckelementen der elektrischen Maschine angeordnet ist, wobei das erste Wärmetauschelement der inneren Wärmetauschvorrichtung an einer Stirnseite eines Rotorpakets befestigt und mit dem Rotorpaket thermisch verbunden ist und das zweite Wärmetauschelement der inneren Wärmetauschvorrichtung an dem benachbarten Abdeckelement befestigt und mit diesem thermisch verbunden ist.

Die Abdeckelemente verschließen die Stirnflächen der elektrischen Maschine zumindest teilweise, wobei ein zwischen den Abdeckelementen liegender Innenbereich der Maschine eingeschlossen wird, in welchem das Rotorpaket des Rotors vollständig aufgenommen ist.

Alternativ und/oder ergänzend dazu kann eine äußere Wärmetauschvorrichtung vorgesehen sein, wobei das erste Wärmetauschelement der äußeren Wärmetauschvorrichtung mit der Welle des Rotors mechanisch und thermisch verbunden ist und das zweite Wärmetauschelement an einem an einer Stirnseite der elektrischen Maschine angeordneten und fest mit dem Stator verbundenen Abdeckelement befestigt und mit diesem thermisch verbunden ist.

Besonders günstig kann es sein, wenn das jeweilige Abdeckelement ein Lagerschild ist, wobei in dem Lagerschild zumindest ein Lager zur Lagerung der Welle des Rotors aufgenommen ist. Das Lager ist typischerweise auf der Antriebsseite ein Festlager und auf der gegenüberliegenden Seite ein Loslager, wobei die Lagerung an jeder Seite aus zumindest einem Lager aber auch aus mehreren nebeneinander angeordneten Lagern bestehen kann.

In einer vorteilhaften Weiterbildung der Erfindung ist das zweite Wärmetauschelement der äußeren Wärmetauschvorrichtung an dem Lagerschild angeordnet, wobei vorzugsweise das zweite Wärmetauschelement eine Anschlagfläche aufweist, die ein in dem Lagerschild aufgenommenes Lager gegen eine Verschiebung in Richtung der Drehachse der Welle sichert.

Die Wärmetauschvorrichtung/en, insbesondere innere und/oder äußere Wärmetauschvorrichtung/en können an der Antriebsseite und/oder der gegenüberliegenden Rückseite der elektrischen Maschine angeordnet sein. Es können daher in Summe bis zu vier Wärmetauschvorrichtungen, nämlich zwei innere und zwei äußere Wärmetauschvorrichtungen, an einer elektrischen Maschine angeordnet sein.

Zur Verbesserung des thermischen Verhaltens einer elektrischen Maschine kann der Stator zumindest eine Mantelkühlvorrichtung aufweisen oder mit dieser verbunden sein, wobei die Mantelkühlvorrichtung vorzugsweise Kühlrippen zur Luftkühlung und/oder einen wassergekühlten Kühlkreislauf aufweist. Die erfindungsgemäßen Wärmeleitelemente und/oder die Wärmetauschelemente können hierbei besonders effektiv eingesetzt werden, da durch das Vorsehen einer Mantelkühlvorrichtung die Temperaturdifferenzen innerhalb der Maschine besonders stark ausgeprägt sein können.

Die Erfindung ist im Folgenden an Hand mehrerer beispielhafter und nicht einschränkender Ausführungsformen näher erläutert, die in den Figuren veranschaulicht sind. Darin zeigt
Figur 1 eine elektrische Maschine in einer perspektivischen Darstellung von schräg vorne,
Figur 2 die elektrische Maschine gemäß Figur 1 in einer perspektivischen Darstellung von schräg hinten,
Figur 3 eine Schnittdarstellung durch die elektrische Maschine gemäß Figur 1,
Figur 4 eine Detailansicht des vorderen, antriebsseitigen Bereich der Schnittdarstellung gemäß Figur 3,
Figur 5 eine Detailansicht des hinteren Bereichs der Schnittdarstellung gemäß Figur 3,
Figur 6 eine perspektivische Darstellung eines ersten Wärmetauschelements,
Figur 7 eine perspektivische Darstellung eines zweiten Wärmetauschelements, und
Figur 8 eine perspektivische Darstellung eines Rotors der elektrische Maschine gemäß Figur 1 samt Lagern.

Im Folgenden bezeichnen - sofern nicht anders angegeben - gleiche Bezugszeichen die gleichen Merkmale.

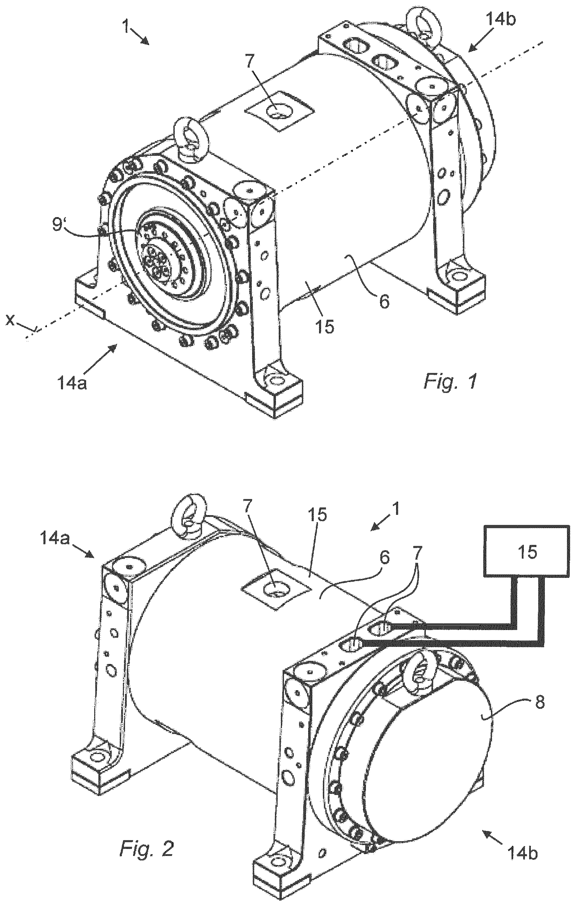

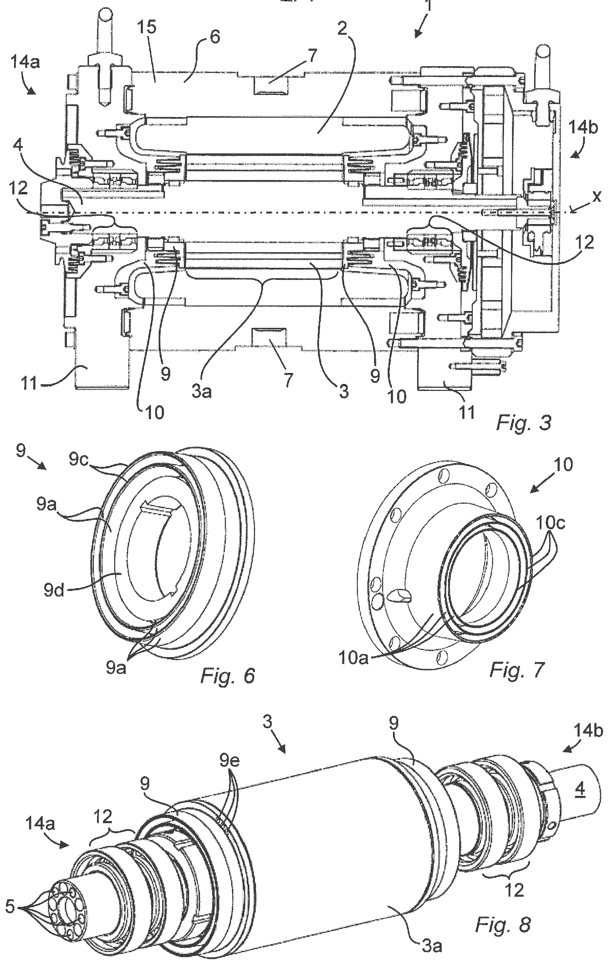

Figur 1 zeigt eine elektrische Maschine 1 in einer perspektivischen Darstellung von schräg vorne, wobei es sich in dem gezeigten Beispiel um eine Synchronmaschine handelt. Wie bereits eingangs erwähnt, könnte es sich bei der Maschine 1 ebenso um eine Gleichstrommaschine oder eine Asynchronmaschine handeln. Die elektrische Maschine 1 weist einen Mantel 6, zwei einander gegenüberliegende Stirnflächen 14a und 14b sowie ein erstes Wärmetauschelement 9' auf, welches mit einem in Fig. 3 gezeigten Rotor 3 drehfest zur Drehung um die Drehachse x verbunden ist. Die erste Stirnfläche 14a entspricht der Antriebsseite der elektrischen Maschine 1, wohingegen die in Fig. 2 gezeigte zweite Stirnfläche 14b die Rückseite der Maschine 1 darstellt. Diese Rückseite ist mittels eines Gehäusedeckels 8 verschlossen. Der Mantel 6 ist mit einer Mantelkühlvorrichtung 15, insbesondere einem Wasserkühlkreislauf verbunden oder ausgestattet, wobei entsprechende Ein- und Auslässe 7 für die Zu- und Abfuhr des Kühlmittels dargestellt sind. Im Mantel 6, der beispielsweise als Aluminiumkühlmantel ausgeführt sein kann, kann sich eine große Anzahl von axialen Bohrungen befinden, die sich über die gesamte Länge mit ca. 16mm Durchmesser erstrecken und in der Wandung des Mantels 6 angeordnet sind. Diese Bohrungen sind vorzugsweise stirnseitig wechselweise durch Fräsungen zwischen jeweils zwei Bohrungen verbunden (z.B. Bohrung 1 auf Bohrung 2 vorne, Bohrung 2 auf 3 hinten, 3 auf 4 vorne, etc.). Oben und unten kann mittig der Ein- und/oder Auslass 7 angeordnet sein. Vorzugsweise wird das Kühlwasser von unten eingeleitet, durchströmt dann im Zick-Zack die Maschine zur Hälfte links herum und zur anderen Hälfte rechts herum und kommt oben wieder heraus. Um die Mantelkühlvorrichtung 15 zu entlüften und lokale Platzverhältnisse berücksichtigen zu können, kann der Mantel weitere Ein- und Auslässe 7 aufweisen.

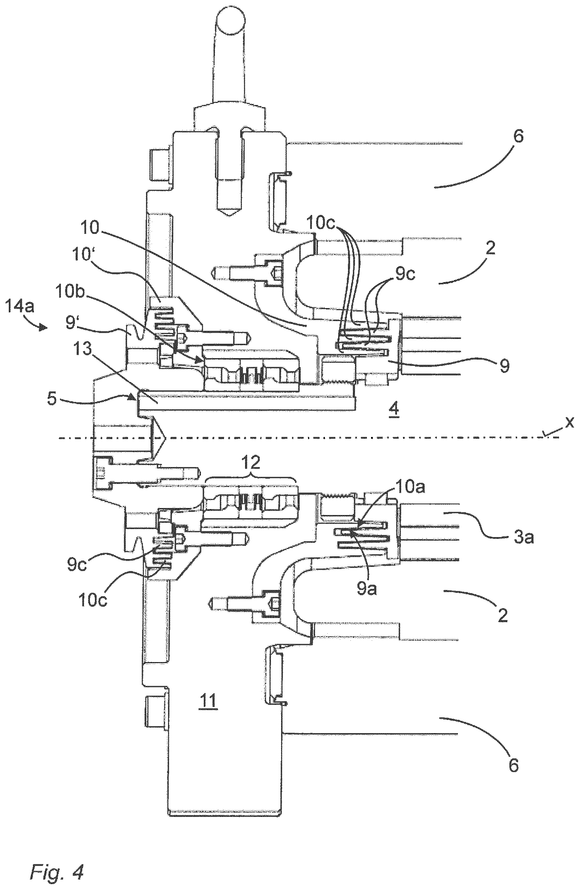

Figur 3 zeigt einen Längsschnitt durch die elektrische Maschine 1. Darin ist ein Stator 2 erkennbar, der mit in den Figuren nicht dargestellten Wicklungen zur Erzeugung eines magnetischen Feldes, insbesondere eines Drehfeldes, versehen ist. Innerhalb des Stators 2 und über diesen hinaus erstreckt sich ein Rotor 3, wobei sich die Rotorwicklungen innerhalb des Rotorpakets 3a befinden. Das Rotorpaket 3a ist durch zwei einander gegenüberliegende Stirnflächen begrenzt, an welchen je ein erstes (inneres) Wärmetauschelement 9 angebracht ist. Diesem ersten Wärmetauschelement 9 liegt jeweils ein korrespondierendes zweites (inneres) Wärmetauschelement 10 gegenüber, wobei das jeweilige erste und zweite Wärmetauschelement 9 und 10 gemeinsam eine Wärmetauschvorrichtung ausbilden. Die ersten, mit der Stirnseite des Rotorpakets 3a verbundenen Wärmetauschelemente 9 sind im gezeigten Ausführungsbeispiel über eine Nut-Feder-Verbindung mit einer Welle 4 des Rotors 3 verbunden, können allerdings auf beliebige andere Art und Weise mit dem Rotor 3 drehfest verbunden werden. Die dazu korrespondierenden zweiten Wärmetauschelemente 10 sind mit dem Stator 2 drehfest verbunden und je an einem Abdeckelement 11 angebracht. Das Abdeckelement 11 ist als Lagerschale ausgebildet, in welchem ein Lager 12zur Lagerung der Welle 4 aufgenommen ist. Die Abdeckelemente 11 sind mit dem Stator 2 fest verbunden, sodass die zweiten Wärmetauschelemente 10 mittels den Abdeckelementen 11 drehfest mit dem Stator 2 verbunden sind. Nähere Details zur Anordnung der Wärmetauschelemente 9 und 10 sowie weiterer Komponenten werden nun mit Blick auf die Figuren 4 bis 8 erörtert.

Figur 4 zeigt eine Detailansicht des vorderen, antriebsseitigen Bereichs der elektrischen Maschine 1 gemäß der Schnittdarstellung aus Figur 3. Wie bereits erwähnt, ist ein erstes Wärmetauschelement 9 mit einer Stirnseite des Rotorpakets 3a thermisch verbunden, wobei diesem ersten Wärmetauschelement 9 ein zweites Wärmetauschelement 10 gegenüberliegt, welches mit einer dem Rotorpaket 3a zugewandten Innenseite des Abdeckelements 11 verbunden ist. Diese beiden Wärmetauschelemente bilden gemeinsam eine innere Wärmetauschvorrichtung. Um den Wärmeübergang zwischen den Wärmetauschelementen 9 und 10 und dem Rotorpaket 3a bzw. dem Abdeckelement 11 zu verbessern, wird der Übergangsbereich zwischen den Wärmetauschelementen 9, 10 und dem Rotorpaket 3a bzw. dem Abdeckelement 11 vorzugsweise mit Wärmeleitpaste versehen.

Des Weiteren ist in Figur 4 ein weiteres erstes (äußeres) Wärmetauschelement 9 erkennbar, welches an einem stirnseitigen Ende der Welle 4 mit der Welle 4 verbunden ist. Ein dazu korrespondierendes zweites (äußeres) Wärmetauschelement 10 ist an der Außenseite des Abdeckelements 11 angeordnet und so ausgebildet, dass ein in dem Abdeckelement 11 aufgenommenes Lager 12 durch eine Anschlagsfläche 10b des zweiten Wärmetauschelements 10 gegen ein Lösen in Achsrichtung gesichert wird. Die an der Außenseite des Abdeckelements 11 angeordneten Wärmetauschelemente 9' und 10' bilden gemeinsam eine äußere Wärmetauschvorrichtung. Sofern nicht anders angegeben, gilt für die die äußeren Wärmetauschelemente 9' und 10' das zu den inneren Wärmetauschelementen 9 und 10 Gesagte.

Die zweiten Wärmetauschelemente 10 und 10' sind in dem gezeigten Beispiel ortsfest mit den Abdeckelementen 11 mittels entsprechender Schraubenverbindungen verbunden. Die ersten Wärmetauschelemente 9 hingegen folgen der Drehbewegung des Rotors 3 und übertragen die in der Welle 4 und/oder im Rotorpaket 3a aufgenommene thermische Energie in das jeweils gegenüberliegende zweiten Wärmetauschelements 10, welches die Wärme wiederum in das Abdeckelement 11 überführt. Das Abdeckelement 11 weist üblicherweise eine niedrigere Temperatur auf, insbesondere dann, wenn die elektrische Maschine 1 eine mit dem Abdeckelement 11 verbundene Mantelkühlvorrichtung 15 aufweist.

Der Wärmeaustausch zwischen dem ersten und dem zweiten Wärmetauschelementen 9 bzw. 9' und 10 bzw. 10' erfolgt über die Wärmetauschflächen 9a bzw. 10a (zur einfacheren Darstellung wurde nur je eine Fläche der inneren Wärmetauschvorrichtung in Fig. 4 mit einem Bezugszeichen versehen, Fig. 6 und 7 zeigen eine detailliertere Darstellung, die Flächen sind bei der äußeren Wärmetauschvorrichtung in analoger Weise vorgesehen), die sich zumindest in einem Teilbereich von einer Stirnseite des Rotors 3 ausgehend in einer Richtung entlang des Rotors 3 erstrecken und zumindest innerhalb dieses Teilbereichs einander in Radialrichtung des Rotors 3 gegenüberliegen. Die Wärmetauschflächen 9a und 10a sind zudem konzentrisch zur Drehachse x des Rotors 3 bzw. der Welle 4 angeordnet. Die ersten und zweiten Wärmetauschelemente 9 und 10 weisen in dem gezeigten Beispiel je zumindest zwei ringförmige Vorsprünge 9c, 10c auf, wobei die Wärmetauschflächen 9a und 10a an der Oberfläche der Vorsprünge 9c und 10c ausgebildet sind. Die Wärmetauschflächen 9a bzw. 10a erstrecken sich vorzugsweise entlang der gesamten Oberfläche der Vorsprünge 9c bzw. 10c. Alternativ dazu könnten sich die Wärmetauschflächen 9a bzw. 10a auch lediglich entlang eines oder mehrerer einzelner Abschnitte der Oberfläche der Vorsprünge 9c bzw. 10c erstrecken.

Dabei sind die Wärmetauschelemente 9 und 10 vorzugsweise dergestalt ausgebildet, dass sich die Vorsprünge 9c des ersten Wärmetauschelements 9 in zwischen den Vorsprüngen 10c des zweiten Wärmetauschelements 10 liegende Bereiche erstrecken und/oder umgekehrt. Die Wärmetauschflächen 9a und 10a berühren einander nicht und sind abhängig von der Dimensionierung der elektrischen Maschine 1 sowie der Wärmetauschelemente 9 und 10 zwischen 0,3mm und 10mm, vorzugsweise zwischen 0,3mm und 2mm voneinander beabstandet. Zwischen den Wärmetauschflächen 9 und 10 befindet sich ein Fluid bzw. Medium, vorzugsweise Luft, wobei der Wärmeübergang zwischen den Flächen durch das Fluid bzw. Medium durch Konvektion erfolgen kann. Die Wärmetauschflächen 10a des zweiten Wärmetauschelements 10 und die Wärmetauschflächen 9a des ersten Wärmetauschelements 9 erstrecken sich, wie bereits erwähnt, in einem Teilbereich von einer Stirnseite des Rotors 3 ausgehend in einer Richtung entlang des Rotors 3, wobei die Wärmetauschflächen 9a, 10a dieses Teilbereichs einander in Radialrichtung des Rotors 3 gegenüberliegen und konzentrisch zur Drehachse des Rotors 3 angeordnet sind. Der Teilbereich erfasst in dieser Ausführungsform zumindest 50%, vorzugsweise zumindest 80% der Erstreckung der Wärmetauschflächen 9a und 10a in Richtung entlang des Rotors 3 bzw. in Achsrichtung x.

Figur 4 zeigt zudem eine innerhalb der Welle 4 verlaufende Öffnung 5, die von der Stirnseite der Welle 4 in einer Richtung entlang der Drehachse x verläuft. In diese Öffnung ist zumindest ein, vorzugweise genau ein Wärmeleitelement 13 eingesetzt, wobei das Wärmeelement 13 aus einem Material besteht, welches eine höhere Wärmeleitfähigkeit als das Material der Welle 4 aufweist. In der gezeigten Ausführungsform befindet sich diese Öffnung 5 in einen Außenbereich der Welle 4, wobei sich der Außenbereich in einem Abstand von R/2 bis R von dem Mittelpunkt der Welle erstreckt, wobei R der Radius der Welle ist. Die Anzahl dieser Öffnungen 5 kann im Prinzip frei gewählt werden und folgt in erster Linie konstruktiven sowie thermischen Anforderungen der elektrischen Maschine. In der gezeigten Ausführungsform sind beispielhaft fünf Öffnungen 5 mit darin aufgenommenen Wärmeleitelementen 13 vorgesehen.

Die Öffnungen 5 sowie die Wärmeleitelemente 13 erstrecken sich vorzugsweise über das Lager 12 hinaus und erlauben es so, Reibungsverlusten der Lager, die insbesondere am Lagerinnenring zu problematischen Erwärmungen führen könnten, gezielt abzuleiten. Die Öffnungen 5 sowie die Wärmeleitelemente 13 enden in dem gezeigten Ausführungsbeispiel vor dem Rotorpaket 3a des Rotors 3, könnten sich aber alternativ dazu ebenso entlang der Welle 4 bis innerhalb des Rotorpaketes 3a erstrecken, um innerhalb des Rotorpakets umgesetzte Verlustleistung gezielt nach außen abzuführen. Diese Variante kann insbesondere bei Asynchronmaschinen besonders vorteilhaft sein, bei welchen die Rotorverlustleistung im Allgemeinen höher ist als bei Synchronmaschinen mit vergleichbarer Nennleistung.

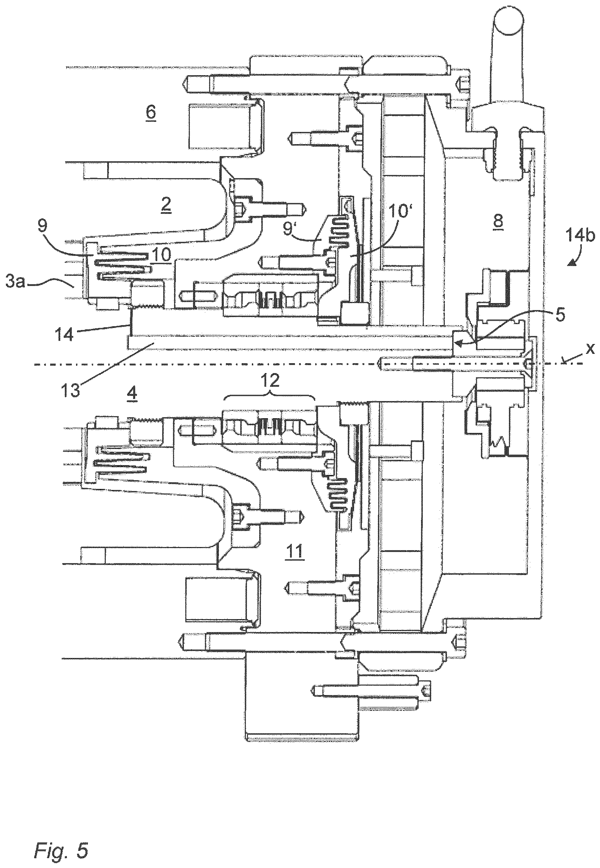

Figur 5 zeigt eine Detailansicht des hinteren, rückseitigen Bereichs der Schnittdarstellung gemäß Figur 3. Die zweite Stirnfläche 14b der Maschine ist von der Antriebsseite abgewandt und mittels des Gehäusedeckels 8 verschlossen. Davon abgesehen stimmt der mechanische Aufbau der Rückseite der elektrischen Maschine 1 in der gezeigten Ausführungsform weitgehend mit dem Aufbau der Vorderseite der Maschine 1 überein. Die elektrische Maschine 1 weist daher auch an dem der Rückseite zugewandten Ende des Rotorpakets 3 ein erstes Wärmetauschelement 9 auf, welches einem zweiten Wärmetauschelement 10 gegenüberliegt, wobei dieses zweite Wärmetauschelement 10 an der Innenseite eines Abdeckelements 11 angebracht ist. Die beiden Wärmetauschelemente 9 und 10 bilden daher eine innere Wärmetauschvorrichtung, wie sie bereits in Zusammenschau mit Fig. 4 beschrieben wurde. Ebenso analog zur Anordnung der Figur 4 ist an der Außenseite des rückseitigen Abdeckelements 11 und der Welle 4 eine äußere Wärmetauschvorrichtung angebracht. Zudem weist die Welle 4 auch an ihrer rückseitigen Stirnfläche Öffnungen 5 auf, die zur Aufnahme von Wärmeleitelementen 13 eingerichtet sind. Die Öffnungen 5 (sowohl an der Vorderseite als auch an der Rückseite der Welle 4) weisen eine die Welle 4 nach außen durchsetzende Bohrung 14 auf, wobei die Bohrung 14 in einem von der Stirnseite abgewandten Endbereich der Öffnung 5 angeordnet ist, sodass dieser während des Einsetzens eines Wärmeleitelements 13 in die Öffnung 5 ein Entweichen von überschüssiger Luft, Kleber und/oder Wärmeleitpaste ermöglicht.

Figur 6 zeigt eine perspektivische Darstellung eines beispielhaften ersten Wärmetauschelements 9 einer inneren Wärmetauschvorrichtung. Dieses erste Wärmetauschelement 9 weist zwei ringförmige Vorsprünge 9c auf, an deren Innen- und Außenflächen Wärmetauschflächen 9a ausgebildet sind. Zudem weist das erste Wärmetauschelement 9 einen inneren Fixierring 9d auf, der zwei einander gegenüberliegende nutförmige Ausnehmungen aufweist, mittels welchen das erste Wärmetauschelement 9 drehfest mit der Welle 4 verbunden werden kann. Diese Ausnehmungen gewährleisten eine positionsgenaue Ausrichtung des ersten Wärmetauschelements 9 in Bezug auf die Welle 4. Dies kann von besonderer Bedeutung sein, beispielsweise wenn das erste Wärmetauschelement 9 mit entsprechenden Wuchtgewichten und/oder Materialabtragungen ausgestattet ist, um eine Unwucht der Welle auszugleichen. Der innere Fixierring 9d weist an seiner Außenseite eine zusätzliche Wärmetauschfläche 9a auf, sodass das erste Wärmetauschelement 9 in dieser Ausführungsform in Summe fünf Wärmetauschflächen 9a besitzt.

Figur 7 zeigt eine perspektivische Darstellung eines zu dem ersten Wärmetauschelement 9 gemäß Fig. 6 korrespondierenden zweiten Wärmetauschelements 10. Dieses Wärmetauschelement 10 weist drei ringförmige Vorsprünge 10c auf, die dergestalt angeordnet sind, dass die Vorsprünge 9c des ersten Wärmetauschelements 9 in die zwischen den Vorsprüngen 10c ausgebildeten Vertiefungen eingreifen und darin rotieren können. Die einander gegenüberliegenden Wärmetauschelemente 9 und 10 sind daher vorzugsweise hülsenförmig oder trommelförmig ausgebildet.

Figur 8 zeigt eine perspektivische Darstellung des Rotors 3 der elektrischen Maschine 1 gemäß Figur 1. Darin sind zwei erste Wärmetauschelemente 9 dargestellt, die an den Stirnflächen des Rotorpakets 3a angeordnet sind. Bei dem vorderen, antriebsseitigen ersten Wärmetauschelement 9 sind Wuchtöffnungen 9e erkennbar, in die hier nicht gezeigte Wuchtgewichte eingesetzt werden können oder die durch Vergrößerungen der Bohrungen erweitert werden können bzw. die durch den Materialabtrag zum Wuchtausgleich führen. An der vorderen Stirnseite der Welle 4 sind zudem die Öffnungen 5 gut erkennbar, in die in dieser Figur nicht sichtbare Wärmeleitelemente 13 eingeschoben sind. Die Lager 12 können beliebige dem Fachmann bekannte Lager sein, die zur Lagerung der Welle 4 geeignet sind. Dabei kann es sich, wie bereits zuvor erwähnt, beispielsweise um Fest- oder Loslager handeln. Vorzugsweise befindet sich an einer Seite der Welle 4 ein Festlager und an der gegenüberliegenden Seite ein Loslager, um eine Wärmedehnung der Welle 4 in Axialrichtung aufzunehmen.

Die Öffnungen 5 und Wärmeleitelemente 13 und/oder die Wärmetauschvorrichtung/en sind vorzugsweise so dimensioniert, dass die maximale Rotorerwärmung und/oder die maximale Innenlagertemperatur um zumindest 5 Kelvin, vorzugsweise zumindest 20 Kelvin im Vergleich zu einer herkömmlichen Bauweise gesenkt werden kann.

Die Wärmeleitelemente 13 sind in loser Passung in die Öffnungen 5 eingesetzt. Die Öffnungen 5 sind dergestalt angeordnet, dass der gemeinsame geometrische Schwerpunkt darin angeordneter Wärmeleitelemente 13 auf der Drehachse x der Welle 4 bzw. des Rotors 3 liegt. Die Wärmeleitelemente füllen die Querschnittsfläche der Öffnungen 5 vorzugsweise zumindest zu 95%, besonders bevorzugt zu 98% oder 99%, aus und bestehen in einer günstigen Ausführungsform aus Kupfer, Kupferlegierungen und/oder aus Aluminium. Vorzugsweise sind die Wärmeleitelemente 13 stabförmig mit kreisrundem Querschnitt ausgebildet.

Die Erfindung ermöglicht es mittels der Wärmetauschvorrichtung und/oder der Wärmeleitelemente 13 die Rotortemperatur und/oder Lagertemperatur zu senken. In Anbetracht dieser Lehre ist der Fachmann in der Lage zu anderen nicht gezeigten Ausführungsformen der Erfindung zu gelangen. Die Erfindung ist daher nicht auf die gezeigten Ausführungsformen beschränkt. Auch können einzelne Aspekte der Erfindung bzw. der Ausführungsformen aufgegriffen und miteinander kombiniert werden. Wesentlich sind die der Erfindung zugrunde liegenden Gedanken, die durch einen Fachmann in Kenntnis dieser Beschreibung in mannigfaltiger Weise ausgeführt werden können und trotzdem als solche aufrechterhalten bleiben.

## Patentansprüche

1. Elektrische Maschine (1) mit einem Stator (2) sowie einem zumindest teilweise innerhalb des Stators (2) angeordneten Rotor (3) mit einer Welle (4), die an zumindest einer Stirnseite zumindest eine, in einer Richtung entlang der Drehachse (x) der Welle (4) verlaufende Öffnung (5) aufweist, wobei in die Öffnung (5) zumindest ein Wärmeleitelement (13) eingesetzt ist, **dadurch gekennzeichnet, dass**
das Wärmeleitelement (13) vollständig aus einem Material mit einer höheren Wärmeleitfähigkeit als das Material der Welle (4) besteht und die Querschnittsfläche der Öffnung (5) zumindest zu 95% ausfüllt.

2. Elektrische Maschine (1) nach Anspruch 1,
**dadurch gekennzeichnet, dass**
die zumindest eine Öffnung (5) parallel zur Drehachse (x) der Welle (4) verläuft.

3. Elektrische Maschine (1) nach Anspruch 1 oder 2,
**dadurch gekennzeichnet, dass**
die zumindest eine Öffnung (5) und das darin aufgenommene Wärmeleitelement (13) dieselbe Querschnittsform, vorzugsweise einen kreisrunden Querschnitt aufweisen.

4. Elektrische Maschine (1) nach Anspruch 3,
**dadurch gekennzeichnet, dass**
das zumindest eine Wärmeleitelement (13) in loser Passung in die zumindest eine Öffnung (5) eingesetzt ist.

5. Elektrische Maschine (1) nach einem der Ansprüche 1 bis 4,
**dadurch gekennzeichnet, dass**
die Welle (4) zumindest zwei oder mehr Öffnungen (5) aufweist, in die jeweils zumindest ein Wärmeleitelement (13) eingesetzt ist.

6. Elektrische Maschine (1) nach Anspruch 5,
**dadurch gekennzeichnet, dass**
die Öffnungen (5) dergestalt angeordnet sind, dass der gemeinsame geometrische Schwerpunkt darin angeordneter Wärmeleitelemente (13) auf der Drehachse (x) der Welle (4) liegt.

7. Elektrische Maschine (1) nach Anspruch 5 oder 6,
**dadurch gekennzeichnet, dass**
die Öffnungen (5) in einem Außenbereich der Welle (4) angeordnet sind, der sich in einem Abstand von R/2 bis R von dem Mittelpunkt der Welle (4) erstreckt, wobei R der Radius der Welle (4) ist.

8. Elektrische Maschine (1) nach einem der Ansprüche 1 bis 7,
**dadurch gekennzeichnet, dass**
sich die zumindest eine Öffnung (5) und/oder das zumindest eine Wärmleitelement (13) von einer ersten oder zweiten Stirnseite der Welle (4) entlang der Drehachse (x) in Richtung der gegenüberliegenden zweiten oder ersten Stirnseite zumindest bis zum Bereich der der ersten oder der zweiten Stirnseite zugeordneten Lager (12), vorzugsweise zumindest bis zu einem Rotorpaket (3a) des Rotors (3), besonders bevorzugt zumindest bis zu einem innerhalb des Rotorpakets (3a) liegenden Bereich erstrecken.

9. Elektrische Maschine (1) nach einem der Ansprüche 1 bis 8,
**dadurch gekennzeichnet, dass**
die zumindest eine Öffnung (5) eine die Welle (4) nach außen, vorzugsweise in radialer Richtung, durchsetzende Bohrung (14) aufweist, wobei die Bohrung (14) vorzugsweise in einem von der Stirnseite abgewandten Endbereich der Öffnung (5) angeordnet ist, welcher Endbereich frei von Wärmeleitelementen (13) ist.

10. Elektrische Maschine (1) nach einem der Ansprüche 1 bis 9,
**dadurch gekennzeichnet, dass**
die Gesamtquerschnittsfläche der Öffnungen (5) einen Flächenanteil von 5 bis 50%, vorzugsweise 15 bis 30%, besonders bevorzugt 15 bis 20% der Querschnittsfläche der Welle (4) einnehmen.

11. Elektrische Maschine (1) nach einem der Ansprüche 1 bis 10,
**dadurch gekennzeichnet, dass**
die elektrische Maschine (1) zumindest eine Wärmetauschvorrichtung mit zumindest einem mit dem Rotor (3) drehfest verbundenen ersten Wärmetauschelement (9) sowie zumindest einem mit dem Stator (2) drehfest verbundenen zweiten Wärmetauschelement (10) aufweist, wobei das erste und das zweite Wärmetauschelement (9, 10) je zumindest eine Wärmetauschfläche (9a, 10a) aufweisen, wobei sich die Wärmetauschflächen (9a, 10a) zumindest in einem Teilbereich von einer Stirnseite des Rotors (3) ausgehend in einer Richtung entlang des Rotors (3) erstrecken und die Wärmetauschflächen (9a, 10a) zumindest innerhalb dieses Teilbereichs einander in Radialrichtung des Rotors (3) gegenüberliegen und konzentrisch zur Drehachse (x) des Rotors (3) verlaufend angeordnet sind.

12. Elektrische Maschine (1) nach Anspruch 11,
**dadurch gekennzeichnet, dass**
das erste Wärmetauschelement (9) und/oder das zweite Wärmetauschelement (10) zumindest einen, vorzugsweise zwei oder mehr zumindest abschnittsweise ringförmige Vorsprünge (9c, 10c) aufweisen, wobei die Wärmetauschflächen (9a, 10a) an der Oberfläche der Vorsprünge (9c, 10c) ausgebildet sind.

13. Elektrische Maschine (1) nach Anspruch 12,
**dadurch gekennzeichnet, dass**
die einzelne Vorsprünge (9c, 10c) des ersten Wärmetauschelements (9) sich in zwischen den Vorsprüngen (9c, 10c) des zweiten Wärmetauschelements (10) liegende Bereiche erstrecken und/oder umgekehrt.

14. Elektrische Maschine (1) nach einem der Ansprüche 11 bis 13,
**dadurch gekennzeichnet, dass**
zumindest eine innere Wärmetauschvorrichtung vorgesehen ist, die zwischen zwei stirnseitig angeordneten, fest mit dem Stator (2) verbundenen Abdeckelementen (11) der elektrischen Maschine angeordnet ist, wobei das erste Wärmetauschelement (9) der inneren Wärmetauschvorrichtung an einer Stirnseite eines Rotorpakets (3a) befestigt und mit dem Rotorpaket (3a) thermisch verbunden ist und das zweite Wärmetauschelement (10) der inneren Wärmetauschvorrichtung an dem benachbarten Abdeckelement (11) befestigt und mit diesem thermisch verbunden ist.

15. Elektrische Maschine (1) nach einem der Ansprüche 11 bis 14,
**dadurch gekennzeichnet, dass**
zumindest eine äußere Wärmetauschvorrichtung vorgesehen ist, wobei das erste Wärmetauschelement (9) der äußeren Wärmetauschvorrichtung mit der Welle (4) des Rotors (3) mechanisch und thermisch verbunden ist und das zweite Wärmetauschelement (10) an einem an einer Stirnseite der elektrischen Maschine (1) angeordneten und fest mit dem Stator (2) verbundenen Abdeckelement (11) befestigt und mit diesem thermisch verbunden ist.

16. Elektrische Maschine (1) nach Anspruch 14 oder 15,
**dadurch gekennzeichnet, dass**
das jeweilige Abdeckelement (11) ein Lagerschild ist, wobei in dem Lagerschild zumindest ein Lager (12) zur Lagerung der Welle (4) des Rotors (3) aufgenommen ist.

17. Elektrische Maschine (1) nach Anspruch 16,
**dadurch gekennzeichnet, dass**
das zweite Wärmetauschelement (10) der äußeren Wärmetauschvorrichtung an dem Lagerschild angeordnet ist, wobei vorzugsweise das zweite Wärmetauschelement (10) eine Anschlagfläche (10b) aufweist, die ein in dem Lagerschild aufgenommenes Lager (12) gegen eine Verschiebung in Richtung der Drehachse (x) der Welle (4) sichert.

18. Elektrische Maschine (1) nach einem der Ansprüche 11 bis 17,
**dadurch gekennzeichnet, dass**
die Wärmetauschvorrichtung/en, insbesondere innere und/oder äußere Wärmetauschvorrichtung/en an der Antriebsseite und/oder der gegenüberliegenden Rückseite der elektrischen Maschine (1) angeordnet ist/sind.

19. Elektrische Maschine (1) nach einem der Ansprüche 11 bis 18,
**dadurch gekennzeichnet, dass**
der Stator (2) zumindest eine Mantelkühlvorrichtung (15) aufweist oder mit dieser verbunden ist, wobei die Mantelkühlvorrichtung (15) vorzugsweise Kühlrippen zur Luftkühlung und/oder einen wassergekühlten Kühlkreislauf aufweist.

## Claims

1. Electric machine (1) comprising a stator (2) and a rotor (3) arranged at least partially within the stator (2), said rotor comprising a shaft (4), the shaft (4) having on at least one end face at least one opening (5) extending in a direction along the axis of rotation (x) of the shaft (4), wherein at least one heat-conducting element (13) is inserted into the opening (5),
**characterized in that** the heat-conducting element (13) is entirely made of a material with a higher thermal conductivity than the material of the shaft (4) and occupies at least 95% of the sectional area of the opening (5).

2. Electric machine (1) of claim 1, **characterized in that** the at least one opening (5) extends parallel to the axis of rotation (x) of the shaft (4).

3. Electrical machine (1) of claim 1 or 2, **characterized in that** the at least one opening (5) and the heat conducting element (13) received therein have the same cross-sectional shape, preferably a circular cross-section.

4. Electrical machine (1) of claim 3, **characterized in that** the at least one heat conducting element (13) is inserted with a loose fit into the at least one opening (5).

5. Electrical machine (1) of one of claims 1 to 4, **characterized in that** the shaft (4) comprises at least two or more openings (5), into each of which at least one heat-conducting element (13) is inserted.

6. Electrical machine (1) of claim 5, **characterized in that** the openings (5) are arranged such that the common geometric center of gravity of heat-conducting elements (13) arranged therein is located on the axis of rotation (x) of the shaft (4).

7. Electrical machine (1) of claim 5 or 6, **characterized in that** the openings (5) are arranged in an outer region of the shaft (4) which extends at a distance between R/2 and R from the center of the shaft (4), wherein R is the radius of the shaft (4).

8. Electrical machine (1) of one of claims 1 to 7, **characterized in that** the at least one opening (5) and/or the at least one heat conducting element (13) extend from a first or second end face of the shaft (4) along the axis of rotation (x) in the direction of the opposite second or first end face at least to the area of the bearings (12) associated to the first or the second end face, preferably at least to a rotor packs (3a) of the rotor (3), particularly preferably at least to an area located within the rotor pack (3a).

9. Electrical machine (1) of one of claims 1 to 8, **characterized in that** the at least one opening (5) comprises a bore (14) penetrating the shaft (4) to the outside, preferably in the radial direction, the bore (14) preferably being arranged in an end region of the opening (5) averted from the end face, which end area is free of heat conducting elements (13).

10. Electrical machine (1) of one of claims 1 to 9, **characterized in that** the total cross-sectional area of the openings (5) occupies an area percentage of 5 to 50%, preferably 15 to 30%, particularly preferably 15 to 20% of the cross-sectional area of the shaft (4).

11. Electrical machine (1) of one of claims 1 to 10, **characterized in that** the electrical machine (1) comprises at least one heat exchange device with at least one first heat exchange element (9) non-rotatably connected to the rotor (3), as well as at least one second heat exchange element (10) non-rotatably connected to the stator (2), the first and the second heat exchange elements (9, 10) each comprising at least one heat exchange surface (9a, 10a), the heat exchange surfaces (9a, 10a) extending at least in a partial region from an end face of the rotor (3) in a direction along the rotor (3), and the heat exchange surfaces (9a, 10a) being arranged opposite one another in the radial direction of the rotor (3) at least within this partial area and being arranged to extend concentrically to the axis of rotation (x) of the rotor (3).

12. Electric machine (1) of claim 11, **characterized in that** the first heat exchange element (9) and/or the second heat exchange element (10) have at least one, preferably two or more projections (9c, 10c) which are annular at least in sections, the heat exchange surfaces (9a, 10a) being formed on the surface of the projections (9c, 10c).

13. Electrical machine (1) of claim 12, **characterized in that** the individual projections (9c, 10c) of the first heat exchange element (9) extend into areas between the projections (9c, 10c) of the second heat exchange element (10) and/or vice versa.

14. Electrical machine (1) of one of claims 11 to 13, **characterized in that** at least one inner heat exchange device is provided, which is arranged between two cover elements (11) of the electrical machine that are arranged at the end and are firmly connected to the stator (2), the first heat exchange element (9) of the inner heat exchange device being fastened to one end face of a rotor core (3a) and is thermally connected to the rotor pack (3a) and the second heat exchange element (10) of the inner heat exchange device is fastened to the adjacent cover element (11) and is thermally connected to the same.

15. Electrical machine (1) of one of claims 11 to 14, **characterized in that** at least one external heat exchange device is provided, the first heat exchange element (9) of the external heat exchange device being mechanically and thermally connected to the shaft (4) of the rotor (3) and the second heat exchange element (10) being fastened and thermally connected to a cover element (11) arranged on an end face of the electrical machine (1) and fixedly attached to the stator (2).

16. Electrical machine (1) of claim 14 or 15, **characterized in that** the respective cover element (11) is a bearing plate, at least one bearing (12) being received in the bearing plate to support the shaft (4) of the rotor (3).

17. Electrical machine (1) of claim 16, **characterized in that** the second heat exchange element (10) of the outer heat exchange device is arranged on the bearing plate, the second heat exchange element (10) preferably comprising a stop surface (10b) which secures a bearing (12) received in the bearing plate against displacement in the direction of the axis of rotation (x) the shaft (4).

18. Electric machine (1) of one of claims 11 to 17, **characterized in that** the heat exchange device(s), in particular inner and/or outer heat exchange device(s) is/are arranged on the drive side and/or the opposite rear side of the electrical machine (1).

19. Electric machine (1) of one of claims 11 to 18, **characterized in that** the stator (2) comprises at least one jacket cooling device (15) or is connected thereto, the jacket cooling device (15) preferably comprising cooling fins for air cooling and/or a water-cooled cooling circuit.

## Revendications

1. Machine électrique (1) comportant un stator (2) et un rotor (3) disposé au moins partiellement à l'intérieur du stator (2) et comportant un arbre (4), ledit arbre (4) présentant sur au moins une face d'extrémité au moins une ouverture (5) s'étendant dans une direction le long de l'axe de rotation (x) de l'arbre (4), au moins un élément conducteur de chaleur (13) étant inséré dans ladite ouverture,
**caractérisée en ce que** l'élément conducteur de chaleur (13) est complètement fabriqué en un matériau ayant une conductivité thermique plus élevée que le matériau de l'arbre (4) et occupe au moins 95% de la section transversale de l'ouverture (5).

2. Machine électrique (1) selon la revendication 1, **caractérisée en ce que** ladite au moins une ouverture (5) s'étend parallèle à l'axe de rotation (x) de l'arbre (4).

3. Machine électrique (1) selon la revendication 1 ou 2, **caractérisée en ce que** ladite au moins une ouverture (5) et l'élément conducteur de chaleur (13) reçu dans celle-ci ont la même forme de section transversale, de préférence une section transversale circulaire.

4. Machine électrique (1) selon la revendication 3, **caractérisée en ce que** ledit au moins un élément conducteur de chaleur (13) est inséré avec un ajustement glissant dans ladite au moins une ouverture (5).

5. Machine électrique (1) selon l'une des revendications 1 à 4, **caractérisée en ce que** l'arbre (4) présente au moins deux ou plusieurs ouvertures (5) dans chacune desquelles au moins un élément conducteur de chaleur (13) est inséré.

6. Machine électrique (1) selon la revendication 5, **caractérisée en ce que** les ouvertures (5) sont disposées de telle sorte que le centre de gravité géométrique commun des éléments conducteurs de chaleur (13) disposés là-dedans est situé sur l'axe de rotation (x) de l'arbre (4).

7. Machine électrique (1) selon la revendication 5 ou 6, **caractérisée en ce que** lesdites ouvertures (5) sont disposées dans une région extérieure de l'arbre (4) qui s'étend à une distance entre R/2 et R du centre de l'arbre (4), où R est le rayon de l'arbre (4).

8. Machine électrique (1) selon l'une des revendications 1 à 7, **caractérisée en ce que** ladite au moins une ouverture (5) et/ou l'au moins un élément conducteur de chaleur (13) s'étendent depuis une première ou une deuxième face d'extrémité de l'arbre (4) le long de l'axe de rotation (x) dans la direction de la deuxième ou première face d'extrémité opposée, au moins jusqu'à la zone du palier (12) associé à la première ou la deuxième face d'extrémité, de préférence au moins jusqu'à un ensemble rotor (3a) du rotor (3), particulièrement préférée au moins jusqu'à une zone située à l'intérieur de l'ensemble rotor (3a).

9. Machine électrique (1) selon l'une des revendications 1 à 8, **caractérisée en ce que** ladite au moins une ouverture (5) présente un alésage (14) pénétrant l'arbre (4) vers l'extérieur, de préférence dans la direction radiale, l'alésage (14) étant de préférence disposé dans une zone d'extrémité de l'ouverture (5) opposée à la face d'extrémité, cette zone d'extrémité étant exempte d'éléments conducteurs de chaleur (13).

10. Machine électrique (1) selon l'une des revendications 1 à 9, **caractérisée en ce que** la surface totale de la section transversale des ouvertures (5) occupe un pourcentage de surface de 5 à 50%, de préférence de 15 à 30%, de manière particulièrement préférée de 15 à 20% de la surface de section transversale de l'arbre (4).

11. Machine électrique (1) selon l'une des revendications 1 à 10, **caractérisée en ce que** la machine électrique (1) comporte au moins un dispositif d'échange de chaleur ayant au moins un premier élément d'échange de chaleur (9) connecté de manière non-rotative au rotor (3) et au moins un deuxième élément d'échange de chaleur (10) connecté de manière non-rotative au stator (2), le premier et le deuxième élément d'échange de chaleur (9, 10) ayant chacun au moins une surface d'échange de chaleur (9a, 10a), les surfaces d'échange de chaleur (9a, 10a) s'étendant, au moins dans une zone partielle, à partir d'une face d'extrémité du rotor (3) dans une direction le long du rotor (3) et les surfaces d'échange thermique (9a, 10a) sont opposées l'une à l'autre dans la direction radiale du rotor (3) au moins à l'intérieur de cette zone partielle et sont agencées concentriquement à l'axe de rotation (x) du rotor (3).

12. Machine électrique (1) selon la revendication 11, **caractérisée en ce que** le premier élément d'échange de chaleur (9) et/ou le deuxième élément d'échange de chaleur (10) comportent au moins une, de préférence deux ou plusieurs saillies (9c, 10c) au moins annulaires en sections, les surfaces d'échange de chaleur (9a, 10a) étant formées sur la surface des saillies (9c, 10c).

13. Machine électrique (1) selon la revendication 12, **caractérisée en ce que** les saillies individuelles (9c, 10c) du premier élément d'échange thermique (9) s'étendent dans des zones situées entre les saillies (9c, 10c) du deuxième élément d'échange thermique (10) et/ou vice versa.

14. Machine électrique (1) selon l'une des revendications 11 à 13, **caractérisée en ce qu'**au moins un dispositif d'échange de chaleur interne est prévu, qui est disposé entre deux éléments de couvercle (11) de la machine électrique qui sont disposés côté face d'extrémité et qui sont rigidement connectés au stator (2), le premier élément d'échange de chaleur (9) du dispositif d'échange de chaleur interne étant fixé à une extrémité d'un ensemble de rotor (3a) et est relié thermiquement à l'ensemble de rotor (3a) et le deuxième élément d'échange de chaleur (10) du dispositif d'échange de chaleur interne étant fixé à l'élément de couvercle (11) adjacent et étant relié thermiquement à celui-ci.

15. Machine électrique (1) selon l'une des revendications 11 à 14, **caractérisée en ce qu'**au moins un dispositif d'échange de chaleur externe est prévu, le premier élément d'échange de chaleur (9) du dispositif d'échange de chaleur externe étant relié mécaniquement et thermiquement à l'arbre (4) du rotor (3) et le deuxième élément d'échange de chaleur (10) étant connecté à un élément de couvercle (11) disposé sur une face d'extrémité de la machine électrique (1) et rigidement fixé au stator (2) et relié thermiquement à celui-ci.

16. Machine électrique (1) selon la revendication 14 ou 15, **caractérisée en ce que** l'élément de couvercle respectif (11) est une plaque d'appui, au moins un roulement (12) étant reçu dans la plaque d'appui pour supporter l'arbre (4) du rotor (3).

17. Machine électrique (1) selon la revendication 16, **caractérisée en ce que** le deuxième élément d'échange thermique (10) du dispositif d'échange thermique externe est disposé sur la plaque d'appui, le deuxième élément d'échange thermique (10) ayant de préférence une surface d'appui (10b) sécurisant un palier (12) reçu dans la plaque d'appui contre un déplacement dans la direction de l'axe de rotation (x) la tige (4).

18. Machine électrique (1) selon l'une des revendications 11 à 17, **caractérisée en ce que** le(s) dispositif(s) d'échange de chaleur, en particulier le(s) dispositif(s) d'échange de chaleur interne et/ou externe(s) est/sont disposé(s) du côté entrainement et/ou du côté arrière opposé de la machine électrique (1).

19. Machine électrique (1) selon l'une des revendications 11 à 18, **caractérisée en ce que** le stator (2) comporte au moins un dispositif de refroidissement de l'habillage (15) ou est connecté à celui-ci, le dispositif de refroidissement de l'habillage (15) comportant de préférence des ailettes de refroidissement pour le refroidissement par air et/ou un circuit de refroidissement refroidi par eau.
